# EUROPEAN PATENT SPECIFICATION

(11) **EP 0 702 141 B1**
(45) Date of publication and mention of the grant of the patent: **08.05.2002**
(21) Application number: 95113250.5
(22) Date of filing: 23.08.1995
(51) Int. Cl.: F02K 1/82, G10K 11/16

(54) **Wall assembly for an exhaust gas nozzle of a supersonic jet engine**
Wandaufbau für die Austrittsdüse eines Überschall-Strahltriebwerks
Ensemble parois pour une tuyére de propulsion d'un moteur reacteur supersonique

(30) Priority: 14.09.1994 JP 22006794
(43) Date of publication of application: 20.03.1996
(73) Proprietor: MITSUBISHI JUKOGYO KABUSHIKI KAISHA, Tokyo 100 (JP)
(72) Inventor: Kishi, Kimihiro, c/o Nagoya Guidance & Propulsion, Higashi Tanaka, Komaki-shi, Aichi-ken (JP)
(74) Representative: Henkel, Feiler, Hänzel

(56) References cited:
- FR-A- 2 396 868
- GB-A- 1 373 063
- US-A- 3 507 355
- US-A- 3 640 357
- US-A- 4 747 543
- US-A- 5 184 455

## Description

### BACKGROUND OF THE INVENTION

### 1. FIELD OF THE INVENTION

The present invention relates to a wall assembly for an exhaust gas nozzle of a supersonic jet propelling engine as defined in the preamble portion of claim 1.

### 2. DESCRIPTION OF THE RELATED ART

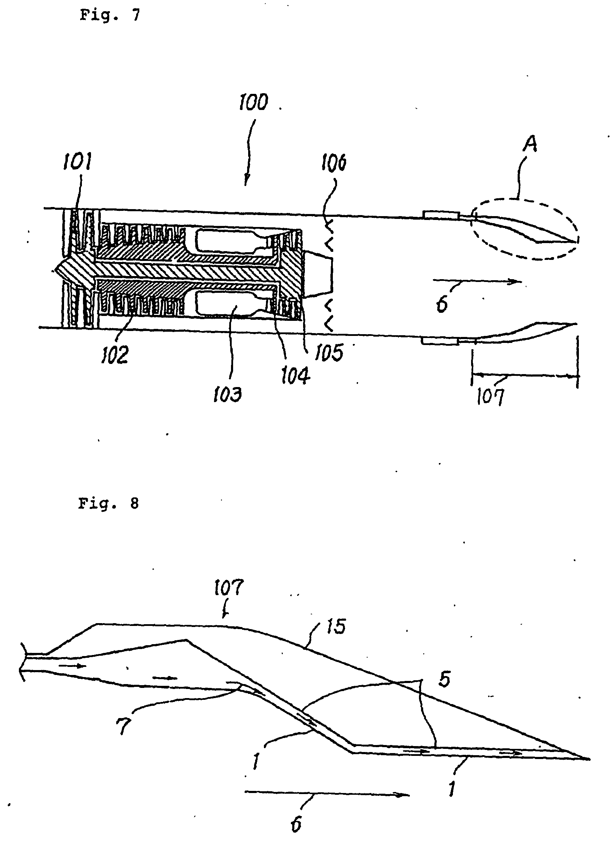

Fig. 7 shows a longitudinal sectional view showing a turbo fan engine which is a typical example of a supersonic jet propelling engine. The propelling engine is composed of, from a front side, a fan 101, a compressor 102, a combustion chamber 103, a high pressure turbine 104, a low pressure turbine 105, an afterburner 106 and an exhaust gas nozzle 107. A combustion gas 6 generated in the combustion chamber 103 flows in a direction indicated by the arrow to be injected through the exhaust gas nozzle 107 to the atmosphere.

Fig. 8 is an enlarged longitudinal sectional view showing' the exhaust gas nozzle 107 shown in Fig. 7. In Fig. 8, there are shown a liner 1, a nozzle plate 5, an outer plate 15 of the exhaust gas nozzle 107, the high temperature combustion gas 6 that flows at a high speed through the nozzle and a cooling air 7 that flows between the liner 1 and the nozzle plate 5 for preventing the temperature elevation of the liner 1. As is apparent from the drawings, the conventional supersonic jet propelling engine is not provided with any sound absorbing material that is usable in the high temperature combustion gas (which would be kept at a temperature of about 2,000°C. Therefore, it is impossible to effect the sound absorbing function for preventing the sound or noise generation in the exhaust jet flow.

In a conventional subsonic airplane jet propelling engine, a fan gas is mixed with the exhaust gas by a flow mixer to decrease the temperature of the exhaust gas, and a noise is reduced by providing the sound or noise absorbing material to the mixer.

A wall assembly for an exhaust gas nozzle of a supersonic jet engine with the features of the preamble portion of claim 1, i.e. a nozzle plate and a liner spaced therefrom and holes provided in the liner for passing cooling air therethrough and a honeycomb structure spaced from the nozzle plate is described in US 4 747 543 A. This reference does not mention the problem of noise reduction in this component of the supersonic jet engine.

US 5 184 455 A is directed to the augmentor liner of an aircraft combustion chamber and teaches to bond a blanket woven from ceramic fibers to a support structure. The absorption of sonic screech waves, i.e. intense combustion induced high frequency pressure oscillations generated in the augmentor under certain conditions, is achieved by entangled fibrous ceramic fibers of this blanket.

GB 1 373 063 A is directed to the structure of isolated sound-absorbent panels.

An object of the present invention is to provide a wall assembly for an exhaust gas nozzle of a supersonic jet engine which may work at a high temperature and provide a sound reduction in this component in addition to the cooling aspect.

### SUMMARY OF THE INVENTION

According to the present invention there is provided a wall assembly for an exhaust gas nozzle of a supersonic jet engine as defined in claim 1. A preferred embodiment is defined in claim 2.

In a supersonic jet engine using the honeycomb structure, holes are formed in the liner for introducing, on a rear side of the exhaust nozzle, a cooling air that flows into the honeycomb structure through porous holes of the porous plate and impinges against the liner surface.

The sound absorbing wall assembly for a supersonic jet propelling engine of the present invention has the above-described structure. In this sound absorbing wall assembly, the sound absorbing member made of the porous plate and the honeycomb structure is provided between the nozzle plate and the liner, and the cooling air is caused to flow along the inside of the nozzle plate and the absorbing member and to impinge against the liner through the holes of the porous plate for the impingement cooling or the liner surface is cooled by a film cooling while flowing from the holes formed in the liner whereby the porous plate, honeycomb structure, and/or liner function as a sound absorbing material.

### BRIEF DESCRIPTION OF THE DRAWINGS

Fig. 1(a) is a longitudinal sectional view showing a sound absorbing wall assembly and Fig. 1(b) is a perspective view showing a sound absorbing wall assembly according to an embodiment of the present invention;
Fig. 2(a) is a longitudinal sectional view showing a sound absorbing apparatus and Fig. 2(b) is a perspective view showing a sound absorbing apparatus;
Fig. 3 is a longitudinal sectional view showing a further sound absorbing apparatus;
Fig. 4 is a longitudinal sectional view showing a still further sound absorbing apparatus;
Fig. 5 is a longitudinal sectional view showing a still further sound absorbing apparatus;
Fig. 6 is a longitudinal sectional view showing a still further sound absorbing apparatus;
Fig. 7 is a longitudinal sectional view showing a typical supersonic jet propelling engine;
Fig. 8 is an enlarged longitudinal sectional view showing an exhaust gas nozzle shown in Fig. 7.

### DESCRIPTION OF THE PREFERRED EMBODIMENT

The present invention will now be described with reference to the accompanying drawings.

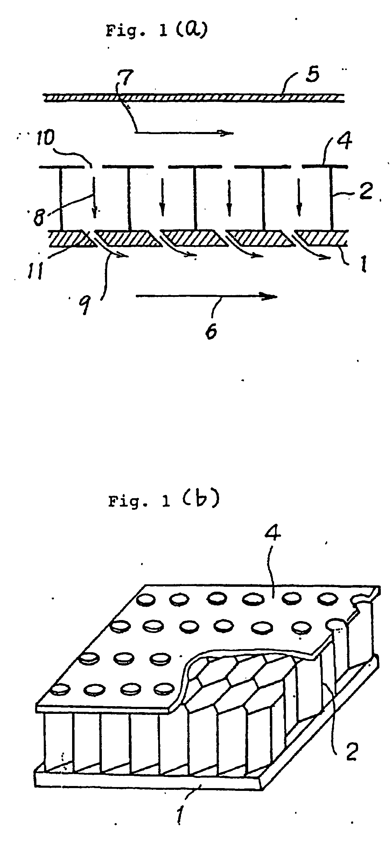

Figs. 1(a) and 1(b) are views showing a sound absorbing wall assembly in accordance with an embodiment of the present invention. Fig. 1(a) is a longitudinal sectional view thereof and Fig. 1(b) is a perspective view thereof. In these drawings, numeral 5 denotes a nozzle plate, numeral 1 denotes a liner, numeral 4 denotes a porous plate, numeral 2 denotes a honeycomb structure formed between the liner 1 and the porous plate 4, numeral 10 denotes holes of the porous plate 4, numeral 11 denotes slant holes formed in the liner 1, numeral 6 denotes a combustion gas, numeral 7 denotes a cooling air, numeral 8 denotes an impinge air that flows through the holes 10 of the porous plate 4 into the honeycomb structure 2 to impinge against the liner 1, and numeral 9 denotes a film air that injects from the holes of the honeycomb structure 2 through the holes 11 of the liner 1 to serve as a film of the air on a surface of the liner 1 exposed to the combustion gas.

The sound absorbing wall assembly according to this embodiment is composed of the liner 1, the honeycomb structure 2 and the porous plate 4. The sound absorbing structure is used in combination with the nozzle plate 5 for absorbing the jet noise produced by the combustion gas 6 and to reduce the noise level.

The cooling of the sound absorbing wall assembly is carried out as follows. The cooling air 7 is caused to flow between the nozzle plate 5 and the porous plate 4 to cool the nozzle plate 5, and at the same time, the impinge air 8 is caused to impinge against the liner 1 from the holes 10 of the porous plate 4. In addition, the film air 9 is blown toward the combustion gas 6 from the holes 11 formed in the liner 1, thereby cooling the liner 1 from the inside.

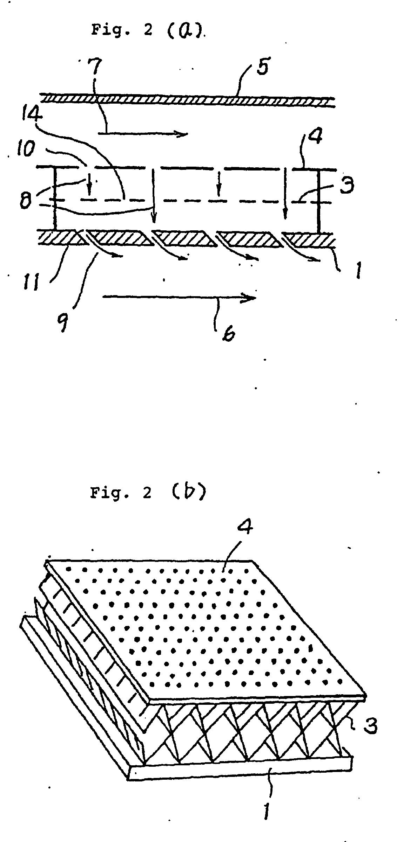

Figs. 2(a) and 2(b) are views showing another example of a sound absorbing apparatus. Fig. 2(a) is a longitudinal sectional view thereof and Fig. 2(b) is a perspective view thereof. In this embodiment, a truss core 3 is used instead of the honeycomb structure 2 of the first embodiment. Numeral 14 denotes holes of the truss core 3. The other structure is the same as that of the first embodiment. The sound absorbing effect and the cooling effect are the same as those of the first embodiment. Since the truss structure is used in this example, it is superior to the first embodiment in deformation followability against the thermal expansion.

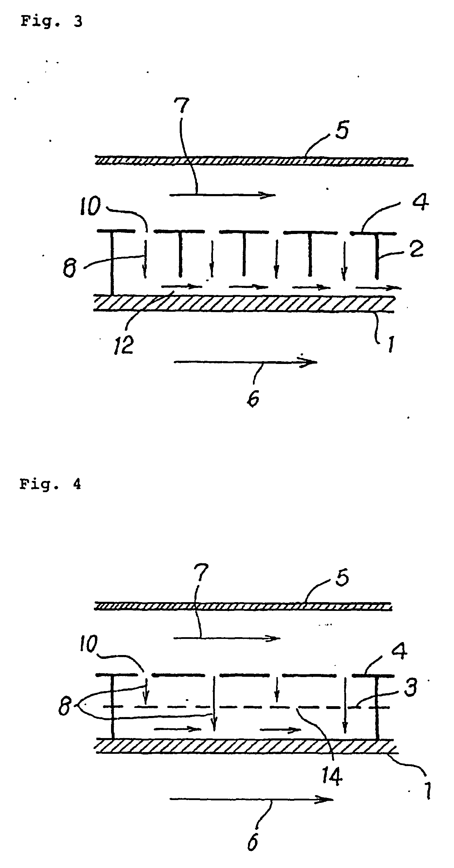

Fig. 3 is a longitudinal sectional view showing a sound absorbing apparatus in accordance with another example. The holes 11 formed in the liner 1 in the first embodiment are dispensed with in this example. Numeral 12 denotes passage of the air that communicates with the interior of the honeycomb structure 2. In this example, there is no film air cooling effect on the side of the liner 1 exposed to the combustion gas 6. In this example, the cooling air is caused to flow toward the rear side along the surface of the liner 1 on the honeycomb structure side through the passage 12 provided in the honeycomb structure 2. One surface of the liner 1 only is to be cooled by the forcible convection and the impinge air 8. In this example, since it is unnecessary to perform the machining of the holes 11 in the liner 1, the cost therefor may be saved. Incidentally, since the air flow passage 12 is provided in the honeycomb structure 2, the sound absorbing effect is somewhat lower than that of the first embodiment.

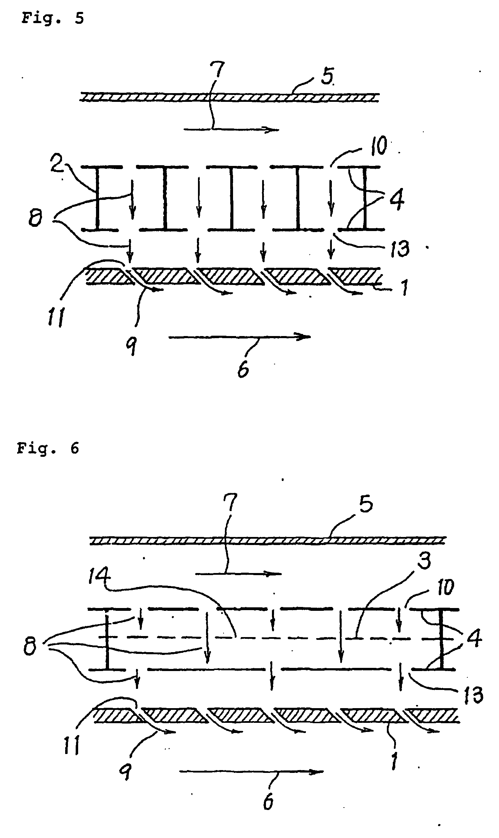

Fig. 4 is a longitudinal sectional view showing a sound absorbing apparatus in accordance with a further example. In this embodiment, the holes 11 formed in the liner 1 in the above example are omitted. Also, in this example, the cooling air is caused to flow along the one-side surface of the liner 1 in the same way as in the third embodiment. Thus, the liner 1 is to be cooled by this forcible convection and the impinge air 8. The machining cost required for the holes of the liner 1 may be saved. The sound absorbing effect is substantially the same as that of the above example.

Fig. 5 is a longitudinal sectional view showing a sound absorbing apparatus in accordance with a still further example. In this example, a porous plate 4 is additionally provided in between the liner 1 and the honeycomb structure 2 so that the impinge air 8 is caused to impinge against the liner 1 from the holes 13 formed in the porous plate 4 on the liner 1 side and at the same time to be blown toward the combustion gas 6 from the holes 11 of the liner 1 to thereby cool the liner 1 with the film air 9.

In this example, the honeycomb structure is independent so that a height of the honeycomb structure may be set as desired, whereby it is possible to keep a high cooling effect while further enhancing the sound absorbing effect. Since the honeycomb structure 2 and the liner 1 are separated from each other, the deformation followability to the thermal expansion is more excellent than that of the first embodiment. The cooling effect of this example is the same as that of the first embodiment.

Fig. 6 is a longitudinal sectional view showing a sound absorbing apparatus in accordance with a still further example. In this example, a porous plate 4 is additionally provided in between the liner 1 and the truss core 3 so that the truss core 3 is independent of the liner 1. The impinge air 8 is caused to impinge against the liner 1 through the holes 13 from the truss core 3, and the film air 9 is blown out through the holes 11 of the liner 1. The advantage and effect of this example is substantially the same as those of the preceding example.

As described above, in the sound absorbing wall assembly for the jet propelling engine according to the present invention, the sound absorbing member composed of the porous plate and the honeycomb structure is provided between the nozzle plate and the liner, the cooling air is caused to flow along the inside surface of the nozzle plate, the cooling air is caused to impinge against the liner through the holes of the porous plate, and further preferably, a number of slant holes directed rearwardly may be formed in the liner, so that the cooling air that has impinged against the liner is injected through the holes for cooling. Accordingly, it is possible to use the wall assembly at a high temperature as well as to reduce the noise generated by the jet. Also, the sound absorbing material is cooled by utilizing the cooling air that has been fed to the exhaust nozzle, thereby simplifying the structure of the sound absorbing wall assembly and reducing the weight thereof.

## Claims

1. A wall assembly for an exhaust gas nozzle of a supersonic jet engine, comprising:
a nozzle plate (5) ;
a liner (1) spaced from said nozzle plate (5), said liner (1) having a first surface, a second surface exposed to hot combustion gases,'and a plurality of holes (11) extending between said first surface and said second surface; and
a honeycomb structure (2) spaced from said nozzle plate (5);
**characterized in that**
the honeycomb structure (2) has a first side opposing said nozzle plate (5) and a second side positioned directly on said first surface of said liner (1); and
a porous plate (4) is attached to said first side of said honeycomb structure (2), wherein said porous plate (4) and said nozzle plate (5) define a cooling air flow passage such that cooling air can flow from said cooling air flow passage through said porous plate (4) into said honeycomb structure (2) and impinge against said first liner surface.

2. The wall assembly as claimed in claim 1, wherein said plurality of holes (11) in said liner (1) are angled in the direction of flow of the hot combustion gas so that a film of cooling air forms along said second surface of said liner (1).

## Patentansprüche

1. Wandanordnung für eine Abgasdüse einer Überschall-Strahlturbine mit:
einer Düsenplatte (5);
einer von der Düsenplatte (5) beabstandeten Auskleidung (1), wobei die Auskleidung (1) eine erste Oberfläche, eine heißen Verbrennungsgasen ausgesetzte zweite Oberfläche und mehrere sich zwischen der ersten Oberfläche und der zweiten Oberfläche erstreckende Löcher (11) aufweist, und
einer Bienenwabenstruktur (2), die von der Düsenplatte (5) beabstandet ist,
**dadurch gekennzeichnet, daß**
die Bienenwabenstruktur (2) eine der Düsenplatte (5) gegenüberliegende erste Seite sowie eine direkt auf der ersten Oberfläche der Auskleidung (1) gelegene zweite Seite aufweist, und
eine poröse Platte (4) an der ersten Seite der Bienenwabenstruktur (2) angebracht ist, wobei die poröse Platte (4) und die Düsenplatte (5) einen Kühlungsluft-Strömungsdurchgang derart festlegen, dass Kühlungsluft von dem Kühlungsluft-Strömungsdurchgang durch die poröse Platte (4) in die Bienenwabenstruktur (2) einströmen und auf die erste Auskleidungs-Oberfläche auftreffen kann.

2. Wandanordnung nach Anspruch 1, wobei die mehreren Löcher (11) in der Auskleidung (1) in der Strömungsrichtung des heißen Verbrennungsgases so abgewinkelt sind, dass sich eine Kühlungsluftschicht entlang der zweiten Oberfläche der Auskleidung (1) bildet.

## Revendications

1. Assemblage formant paroi pour une tuyère à gaz d'échappement d'un moteur à réaction supersonique, comprenant :
une plaque formant tuyère (5) ;
une pièce d'écartement (1) espacée de ladite plaque
formant tuyère (5), ladite pièce d'écartement (1)
ayant une première surface, une deuxième surface exposée aux gaz de combustion chauds, et une pluralité de trous (11) s'étendant entre ladite première surface et ladite deuxième surface ; et
une structure alvéolaire (2) espacée de ladite plaque formant tuyère (5) ;
**caractérisé en ce que**
la structure alvéolaire (2) a un premier côté opposé à ladite plaque formant tuyère (5) et un deuxième côté positionné directement sur ladite première surface de ladite pièce d'écartement (1) ; et
une plaque poreuse (4) est fixée audit premier côté de ladite structure alvéolaire (2), assemblage dans lequel ladite plaque poreuse (4) et ladite plaque formant tuyère (5) définissent un passage d'écoulement d'air de refroidissement tel que de l'air de refroidissement peut s'écouler dudit passage d'écoulement d'air de refroidissement à travers ladite plaque poreuse (4) dans ladite structure alvéolaire (2) et se heurte contre ladite première surface de la pièce d'écartement.

2. Assemblage formant paroi selon la revendication 1, dans lequel ladite pluralité de trous (11) dans ladite pièce d'écartement (1) sont positionnés angulairement par rapport au sens de l'écoulement du gaz de combustion chaud de sorte qu'une couche d'air de refroidissement se forme le long de ladite deuxième surface de ladite pièce d'écartement (1).
